# EUROPÄISCHE PATENTSCHRIFT

(11) **EP 0 685 083 B1**
(45) Veröffentlichungstag und Bekanntmachung des Hinweises auf die Patenterteilung: **02.04.1997**
(21) Anmeldenummer: 94906927.2
(22) Anmeldetag: 08.02.1994
(51) Int. Cl.: G05B 13/02, C02F 3/00

(54) **VERFAHREN ZUM BETRIEB EINER ABWASSERREINIGUNGSANLAGE SOWIE ZUGEHÖRIGE ABWASSERREINIGUNGSANLAGE**
PROCESS FOR OPERATING A SEWAGE WATER CLARIFICATION PLANT AND SEWAGE WATER CLARIFICATION PLANT
PROCEDE D'EXPLOITATION D'UNE INSTALLATION D'EPURATION D'EAUX USEES ET INSTALLATION D'EPURATION D'EAUX USEES

(30) Priorität: 16.02.1993 DE 4304676
(43) Veröffentlichungstag der Anmeldung: 06.12.1995
(73) Patentinhaber: Optum Umwelttechnik GMBH, 09126 Chemnitz (DE)
(72) Erfinder: HAUPT, Martin, D-09126 Chemnitz (DE); ILGE, Hans-Dieter, D-08393 Meerane (DE); THEMANN, Dieter, D-52062 Aachen (DE)
(74) Vertreter: Flach, Dieter Dipl.-Phys.
(86) Internationale Anmeldenummer: EP9400360
(87) Internationale Veröffentlichungsnummer: WO9419729

(56) Entgegenhaltungen:
- EP-A- 0 432 267
- EP-A- 0 521 643
- DE-A- 3 218 421
- DE-A- 4 140 915
- Patent Abstracts of Japan, Band 17, Nr 321(C-1072); & JP,A,0531488 (SUMITOMO JUKIKAI ENVIROTEC K.K.), 1993-02-09
- Patent Abstracts of Japan, Band 15, Nr 352(P-1248); & JP,A,03134706 (HITACHI LTD), 1991-06-07

## Beschreibung

Die Erfindung betrifft ein Verfahren zum Betrieb einer Abwasserreinigungsanlage sowie eine Abwasserreinigungsanlage selbst.

Die Aufbereitung von Abwasser einschließlich Klärschlammanlagen stellt grundsätzlich ein großes Problem dar.

Als problematisch erweist sich der industrielle Prozeß der Abwasserreinigung, insbesondere der biologischen Abwasserreinigung unter anderem deshalb, weil ein deutlicher Mangel an sachbezogenen Hilfsmitteln, Meßgeräten etc. besteht. Zudem sind beispielsweise die biochemischen Entwicklungen innerhalb einer Belebtschlamm-Kläranlage nur wenig erforscht und kaum verstanden. Dies trifft beispielsweise für die Blähschlammbildung zu. Schließlich sind die bekannten Prozeßzusammenhänge hoch komplex und nicht-linear. Zudem wirken in die Prozeßzusammenhänge eine Vielzahl zeitvarianter, systemmspezifischer und Anlagenparameter mit ein.

Schließlich ist sogar die regelungstechnische Zielsetzung für ein entsprechendes Modell zum Betrieb einer Abwasserreinigungsanlage insbesondere einer biologischen Abwasserreinigungsanlage schwer formulierbar, wobei darüber hinaus zu berücksichtigen ist, daß ein Modell immer anlagenspezifisch sein wird und überaus schwierig zu erstellen ist.

Allerdings sind bisher alle konventionellen Ansätze zur Automatisierung eines entsprechenden Prozesses zur Abwasserregelung, zumindest in einem generalisierenden und allgemeinen Sinne wenn nicht gescheitert, so doch zumindest nur sehr unzufrieden gelöst worden.

Aufgabe der vorliegenden Erfindung ist es von daher, ein Verfahren sowie eine Anlage zum Betrieb einer Abwasserreinigung zu schaffen, die auch einen automatisierten Betrieb ermöglicht und zudem eine Optimierung beinhaltet, um die Aufbereitung des Abwassers im Sinne einer Zeitoptimierung, d.h. Zeitminimierung, zu ermöglichen.

Die Aufgabe wird bezüglich des Verfahrens gemäß den im Anspruch 1 bzw. 4 und bezüglich der Abwasserreinigungsanlage gemäß den im Anspruch 5 angegebenen Merkmalen gelöst. Vorteilhafte Ausgestaltungen der Erfindung sind in den Unteransprüchen angegeben.

Durch die vorliegende Erfindung wird ein völlig neuartiger Weg beschritten.

Erfindungsgemäß erfolgt nämlich die Verfahrenssteuerung in Abhängigkeit einer Zielvorgabe nach der Methode der Evolutionsstrategie.

Bei der Methode der Evolutionsstrategie wird mittels der Grundprinzipien "Mutation" und "Selektion" eine zumindest teilweise und/oder tendentiell zufällige Änderung der Steuerungsparameter, d.h. der Stellgrößen, durchgeführt, um nach der Überprüfung der sich verändernden Qualitäts-und Gütevorgaben anhand der nachfolgend vorgenommenen "selektion" festzustellen, ob aufgrund der Mutation eine Veränderung hin zur gewünschten Optimierung und Qualitätssteigerung entsprechend den Vorgaben feststellbar ist. Bei festgestellter Verbesserung kann ein derart durch eine "Mutation" entstandener verbesserter Parametersatz als Ausgangspunkt für eine weitere Verbesserung der Maschineneinstellung ausgewählt werden. Die Mutation verändert also die Maschineneinstellung über einen Zufallsprozeß bzw. im wesentlichen über einen Zufallsprozeß, wobei im Rahmen der Selektion die verbesserten Maschineneinstellungen als Ausgangspunkt für einen nächsten Mutationsschritt ausgewählt werden.

Die Evolutionsstrategie als solche zur Optimierung technischer Systeme ist zwar grundsätzlich bekannt. Insoweit wird nur beispielhaft auf die Veröffentlichung von Rechenberg, I. "Evolutionsstrategie, Optimierung technischer Systeme nach Prinzipien der biologischen Evolution, Frommann-Holzboog, Stuttgart, 1973" und Schwefel, H.P. "Numerische Optimierung von Computer Modellen, Basel, Stuttgart, Birkhäuser, 1977" verwiesen.

Aus der DE 32 18 421 A1 ist zudem ein adaptiver Regler beschrieben, der zur Optimierung vielparametriger, stochastisch gestörter Systeme auf der Basis eines Suchalgorithmus arbeitet, welcher die die biologische Methode der Mutation und Selektion nachahmende Entwicklungsstrategie anwendet. Das in dieser Druckschrift beschriebene Verfahren soll sich insbesondere zur Flugkörperstabilisierung und der Fluglagenregelung von Luft- und Raumflugkörpern eignen.

Bei all den grundsätzlich bekannten Verfahren zur Anwendung der Evolutionsstrategie st allerdings bisher niemals daran gedacht worden, das Evolutionsstrategie-Verfahren auch zur Optimierung von Abwassersystemen, also zur Abwasseraufbereitung zu benutzen, um hier beispielsweise eine on-line Rückkopplung der Qualitätsmerkmale auf die Stellgrößen durchzuführen.

Erfindungsgemäß wird aber nicht lediglich die Umsetzung einer Evolutionsstrategie für einen Abwasserableitungsund -reinigungsprozeß an sich vorgeschlagen. Denn hier könnten die gewünschten Konvergenz- und Umsetzungsgeschwindigkeiten zu gering sein. Erfindungsgemäß wird ein Evolutionsstrategieverfahren unter Berücksichtigung eines Optimiersystems vorgeschlagen, um tatsächlich zu einem optimierten, d.h. in kürzester Zeiteinheit optimalen Ergebnis zu gelangen.

Diese Optimierung kann unter anderem deshalb ermöglicht werden, weil folgendes möglich bzw. zu berücksichtigen ist:
- ein dynamisches Optimieren (ist die optimale Einstellung einmal ermittelt, kann die Optimierung mit kleinen Schrittweiten weitergeführt werden; bei Störungsprozessen ist das System dann in der Lage, einem zeitlich wandernden Optimalbetriebspunkt zu folgen);
- Erfassung der Qualitätsmerkmale (die wichtigsten Qualitätsmerkmale bei der Abwasserbehandlung sind meßtechnisch eindeutig zu ermitteln; zusätzlich verfügt in der Regel das Anlagenpersonal durch seinen Erfahrungsschatz über die Fähigkeit, die Wasser- und Schlammqualität in Abhängigkeit vom Betriebszustand subjektiv zu beurteilen; die subjektive Beurteilung ist gleichzusetzen mit einer objektiven Erfassung, die mit Störgrößen überlagert ist; da die Evolutionsstrategie störgrößenunabhängig eingestellt werden kann, sind subjektiv erfaßte Qualitätsmerkmale brauchbare Eingangsgrößen);
- Prozeßwissen (eine optimierte Strategie berücksichtigt auch ein Prozeßvorwissen in Form einer gegebenen Abhängigkeit einer Ausgangsgröße von einer Stellgröße wiedergebenen Übertragungsfunktion und/oder in Form eines automatisch adaptiven Prozeßwissens über die Übertragungsfunktion).

Erfindungsgemäß wird zur Optimierung ein Prozeßverfahren nach der sogenannten "erweiterten Evolution" vorgeschlagen. Diese "erweiterte Evolution" kann eine
- Erwartungswertverschiebung,
- eine statistische Adaption, und/oder
- eine Steuerung der Schrittweite
berücksichtigen.

Darüber hinaus kann in einer alternativen wie bevorzugten Ausführungsform der Erfindung der Prozeß unter Berücksichtigung einer Regelungsstrategie verbessert werden.

Eine derartige Regelungsstrategie besteht insbesondere auf Basis der Fuzzy-Regelung.

Die industrielle Anwendung der Fuzzy-Steuerung erfolgt in erster Linie dort, wo eine Unschärfe (im Sinne von Vergröberungen) bei der Beschreibung und Bewertung von Prozeßzusammenhängen zulässig sowie nicht-lineares Regelverhalten durchaus erwünscht ist. Dies kann seine Ursache in systeminhärenten Unsicherheiten genauso wie in einer zu hohen Komplexität des Prozesses haben.

Ausschlaggebende Gründe für den Einsatz können sein:
- schwer oder überhaupt nicht erfaßbare Stör- oder Prozeßgrößen,
- erhebliche Nicht-Linearitäten in den Prozeßzusammenhängen,
- zeitvariante Prozeßzusammenhänge, und/oder
- nicht vorhandene oder zu komplexe Prozeßvorgänge.

Es muß als überaus überraschend bezeichnet werden, daß der industrielle Prozeß der biologischen Abwasserreinigung im besonderen wie der Abwasserreinigung im allgemeinen unter Anwendung der Fuzzy-Logik nicht nur als solches betrieben, sondern gegenüber herkömmlichen Lösungen deutlich optimiert werden kann. Dabei kann die Fuzzy-Steuerung als Regelungsstrategie zur Optimierung der erweiterten Evolultion dienen. Die Fuzzy-Steuerung kommt dabei insbesondere am Anfang des Regelungsprozesses wie beim Auftreten einer Störung zum Tragen.

Ganz allgemein kann festgehalten werden, daß derartige dynamische Regelungen wie die Fuzzy-Steuerung im Gegensatz zur quasistatischen Optimierung wesentlich schneller einer Führungsgröße folgen oder eine Störung kompensieren können, vorausgesetzt daß eine Regelung überhaupt einsetzbar ist. Beim Einsatz dabei muß bedacht werden, daß zum Einsatz einer Regelung umfangreiche Kenntnisse über das Prozessübertragungsverhalten vorhanden und die Aufgabenstellung vergleichsweise niederdimensional beschreibbar sein muß.

In einer bevorzugten Weiterbildung der Erfindung ist schließlich auch noch eine Vorwärtskopplung vorgesehen.

Es handelt sich dabei um eine Erfassung von zukünftigen Betriebszuständen. Soll beispielsweise in einer Stunde in einem Belebtschlammbecken ein bestimmter Schadstoff in einer bestimmten Qualität auftreten, kann bereits in einem zeitlichen Vorlauf die Anlage auf diesen Zustand vorbereitet werden, daß sie sich nach Ablauf der entsprechenden Vorlaufzeit in dem gewünschten Zustand befindet (beispielsweise wird entsprechend der Vorlaufzeit begonnen einen entsprechenden Bakterienstamm wachsen zu lassen, damit er nach Ablauf der Vorlaufzeit nach Auftreten der Störgröße in entsprechender Quantität vorliegt).

Bei Weiterbildung der Erfindung ist schließlich auch noch eine Meßgrößenvorhersage vorgesehen.

Mit einer derartigen Meßgrößenvorhersage ist es möglich
- bereits vorab Meßdaten zu antizipieren, bevor sich diese Daten tatsächlich erst auf der Anlage einstellen, und/ oder
- bestimmte beispielsweise nur unter Einsatz sehr teurer Meßgeräte erfaßbare Meßgrößen nicht direkt zu erfassen, sondern stellvertretend dafür andere Meßgrößen zu ermitteln, aus denen die betreffenden sonst nur unter Einsatz teurer Meßgeräte erfaßbaren Meßgrößen herleitbar sind, zumindest von ihrer Größenordnung her.
Weitere Vorteile, Einzelheiten und Merkmale der Erfindung ergeben sich nachfolgend aus den anhand von Figuren und Grafiken dargestellten Ausführungsbeispielen. Dabei zeigen im einzelnen:
- Figur 1 :: ein Diagramm zum Vergleich der Konvergenzgeschwindigkeiten verschiedener Optimierstrategien bei einem Minimierungsproblem im Zusammenhang mit einem Verfahren zum Betrieb einer Abwasserreinigungsanlage;
- Figur 2 :: eine graphische Darstellung zur Optimierung der erweiterten Evolution bei einem erfindungsgemäßen Verfahren;
- Figur 3 :: ein Diagramm zur Darstellung einer Struktur eines verbesserten Optimiersystems für das erfindungsgemäße Verfahren;
- Figur 4a :: ein weiteres Ausführungsbeispiel eines optimierten Verfahrens mit einer sog. Vorwärtskopplung;
- Figur 4b :: ein zu Figur 4a abgewandeltes Verfahren ebenfalls mit einer Vorwärtskopplung;
- Figur 5 :: eine Darstellung eines weiteren Ausführungsbeispieles mit einem optimierten Verfahren der erweiterten Evolutionsstrategie unter Berücksichtigung einer Meßgrößenvorhersage;
- Figur 6 :: eine schematische Darstellung eines Streckmodells für eine Belebtschlamm-Kläranlage;
- Figur 7 :: eine schematische Abbildung einer Belebtschlamm-Kläranlage in regelungstechnischer Hinsicht;
- Figur 8 :: eine vereinfachte Struktur einer biologischen Belebungsstufe im Zusammenhang mit ausgewählten Prozeßzusammenhängen;
- Figur 9 :: eine Darstellung zur Verdeutlichung der Bildung einer Teilqualität sowie einer Gesamtqualität aus den Meßwerten für das erfindungsgemäße Verfahren.

Auf die allgemeinen grundsätzlich bekannten Verfahren der Evolutionstheorie wird auf die einschlägigen Veröffentlichungen, beispielsweise die eingangs genannten Veröffentlichungen verwiesen.

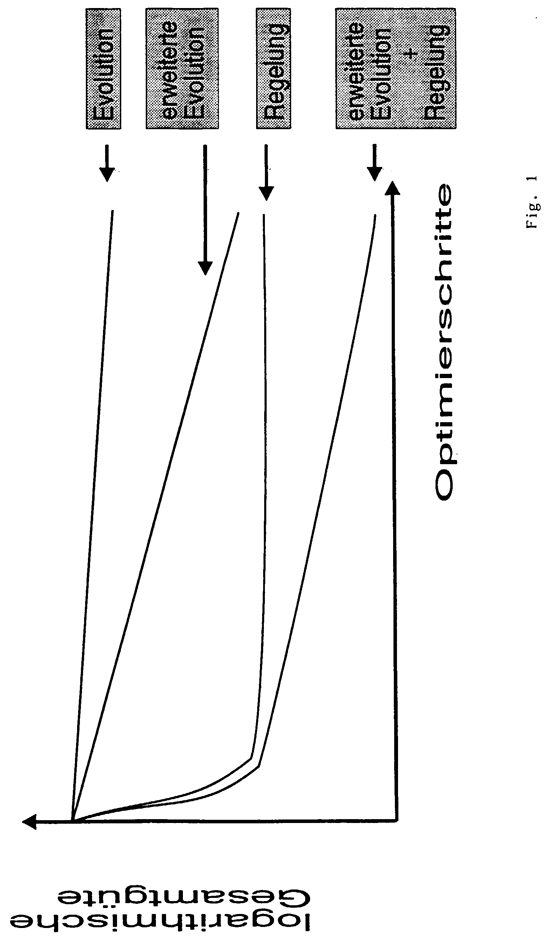

Anhand von Figur 1 ist eine Grafik dargestellt, in der die logarithmische Gesamtgüte bezüglich der unterschiedlichen Konvergenzgeschwindigkeiten der verschiedenen Optimierstrategien bei einem Minimierungsproblem dargestellt sind.

Wie daraus ersichtlich ist, weist die bekannte Evolutionsstrategie in ihrer Allgemeinheit eine vergleichsweise geringe Konvergenzgeschwindigkeit auf.

Günstigere Ergebnisse werden bei der sogenannten "erweiterten Evolution" gemäß Figur 1 erzielt. Bei der Erweiterung der Evolutionsstrategie wird Wissen über den Prozeß zur Veränderung des Optimierverhaltens verwendet. Je mehr Wissen bekannt ist, umso mehr wird die Strategie verändert und die Konvergenz beschleunigt. Das Eindringen des Wissens kann auch adaptiv (sich selbst anpassend) und dynamisch (vom Systemzustand abhängend) gestaltet werden. In dieser Flexibilität ist die erweiterte Evolutionsstrategie anderen Verfahren überlegen.

Bei der erweiterten Evolutionsstragie können beispeilsweise die drei Methoden "Erwartungswertverschiebung", "statistische Adaption" und/oder "Steuerung der Schrittweite" berücksichtigt werden.

Bei der bekannten Evolutionsstrategie in ihrer Allgemeinheit ist die Mutation gleich verteilt oder zumindest um den Nullpunkt gemäß einer symmetrischen Zufallszahl erzeugt. Sind dagegen bestimmte Prozeßzusammenhänge bekannt, so kann eine unsymmetrische und eine symmetrische Zufallszahl, deren Mittelwert um einen sogenannten Erwartungswert vom Nullpunkt abweicht, zur Mutation verwendet werden. Der "zufälligen" Evolution wird somit eine Richtung vorgegeben. Die Stärke dieser Vorgabe kann beliebig gestaltet werden und sollte von dem vermuteten Wahrheitsgehalt des Prozesses abhängen. Die Erwartungswertverschiebung kann für einzelne bekannte Prozeßzusammenhänge eingeführt werden, während sie für die unbekannten Zusammenhänge des gleichen Prozesses bei der gleichen Optimierung nicht eingeführt wird. Zusätzlich kann die Erwartungswertverschiebung vom aktuellen Punkt im Zustandsraum, d.h. der Punkt, an dem sich die Optimierung gerade befindet, abhängig gemacht werden (Erwartungswertverschiebung).

Die Evolutionsstrategie ist selbstadaptierend. Die Schrittweite beispielsweise wird über die 1/5 Regel (Rechenberg) an den Optimierverlauf automatisch angepaßt. Diese Anpassung ist relativ sicher, aber auch relativ träge. Es besteht ebenso die Möglichkeit die Adaption der Evolution über schnellere Methoden durchzuführen, z.B. über statistische Verfahren. Dabei bieten sich die statistischen Kennwerte Trend (zur Adaption der Richtung) und Weite (zur Adaption der Schrittweite) an. Ein weiterer Vorteil ist die getrennte Anpassung jeder einzelnen Stellgröße, wodurch die Konvergenzgeschwindigkeit, wie in eigenenen Simulationsversuchen nachgewiesen werden konnte, je nach Problemstellung, erheblich gesteigert werden kann (statistische Adaption).

Bei der Evolutionsstrategie ist die adaptive Schrittweite ein Maß für den Abstand der Optimierung vom Optimum oder zumindest vom Maximum. Ist der Wert des Optimums bekannt, so kann der Umkehrschluß angetreten werden und der Abstand des aktuellen vom optimalen Wert die Schrittweite steuern. Diese Methode ist bei "gutmütigen" Optimierproblemen sehr effektiv (Steuerung der Schrittweite).

Schließlich wird nur der Vollständigkeit halber angemerkt, daß auch noch eine "Methodenanpassung" unter Berücksichtigung der folgenden Systemmparameter möglich wäre:
- Selektionsmethode
- Methode der Rekombination
- Länge der Elternliste
- Anzahl der Eltern
- Überlebenszeit.

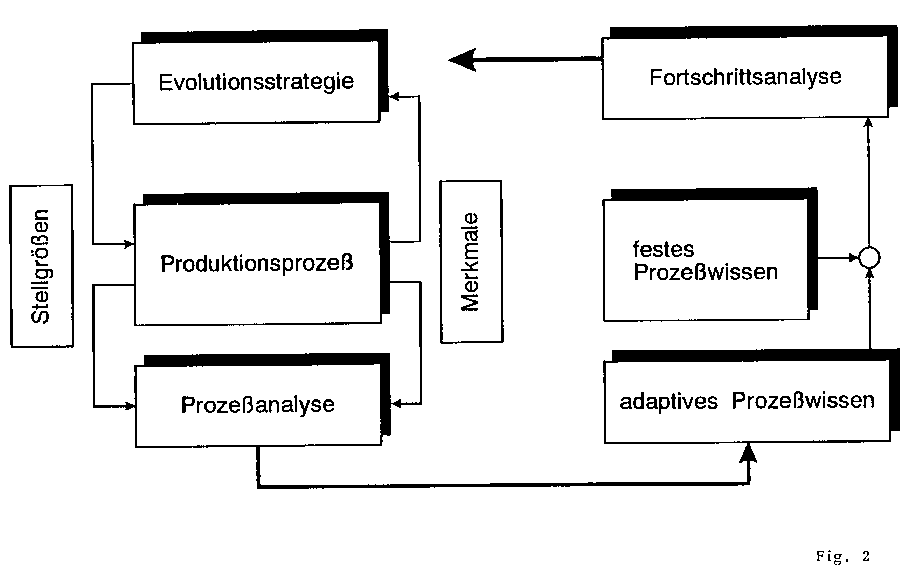

Figur 2 zeigt die grundsätzliche Struktur eines optimierten Abwasserableitungs- und -reinigungsprozesses auf der Basis der erweiterten Evolution. Den Optimierkreislauf bildet der Prozeß mit der Evolutionsstrategie. Die Prozeßanalyse analysiert den Optimierverlauf zur Bildung einer adaptiven Prozeßwissensbasis. Daß adaptive Prozeßwissen wird, kombiniert mit dem festen Prozeßwissen über die Fortschrittsanalyse, auf die Strategieparameter der Evolutionsstrategie zurückgekoppelt.

Zur Erhöhung der Konvergenzgeschwindigkeit kann dabei eine Reduktion der Dimensionierung der Problemstellung mit berücksichtigt werden. Voraussetzung dafür ist die Vernachläßigbarkeit einzelner Wechselwirkungen zwischen den Stellgrößen.

Wie in Figur 1 auch dargestellt ist, können grundsätzlich dynamische Regelungen im Gegensatz zur quasistatischen Optimierung wesentlich schneller einer Führungsgröße folgen oder eine Störung kompensieren, vorausgesetzt allerdings, daß eine Regelung überhaupt einsetzbar ist. Beim Einsatz einer Regelung nämlich müssen umfangreiche Kenntnisse über das Prozessübertragungsverhalten vorhanden und die Aufgabenstellung muß niederdimensional beschreibbar sein.

Diese Voraussetzungen sind meistens nur in Teilgebieten des Zustandsraumes einer komplexen Problemstellung wie der Abwasserableitungs- und -reinigungssystem gegeben. In der Nähe des gesuchten optimalen Betriebspunktes einer derartigen Anlage gelten oft die gewählten Vereinfachungen nicht mehr.

In Figur 1 ist deshalb auch eingetragen, wie ein kombiniertes Optimierungsverfahren zu verbesserten Ergebnissen führt.

Wie aus Figur 1 ersichtlich ist, kann eine Regelung einen gewissen Gütewert schneller erreichen, erzielt aber danach keine weitere Verbesserung. Die beste Konvergenz wird durch anfängliche Regelung mit nachgeschalteter erweiterter Evolution erreicht.

Diese kombinierte Vorgehensweise aus erweiterter Evolution und Regelung bildet die Basis eines optimierten Abwasserreinigungs- und -aufbereitsungsprozesses. Es ist eine Kombination aus einer allgemeingültigen Strategie und einer der Aufgabenstellung angepaßten Vorgehensweise.

Eine derartige Regelung besteht in dem vorliegenden Ausführungsbeispiel in der Anwendung der Fuzzy-Steuerung, auf die nachfolgend noch im einzelnen eingegangen wird.

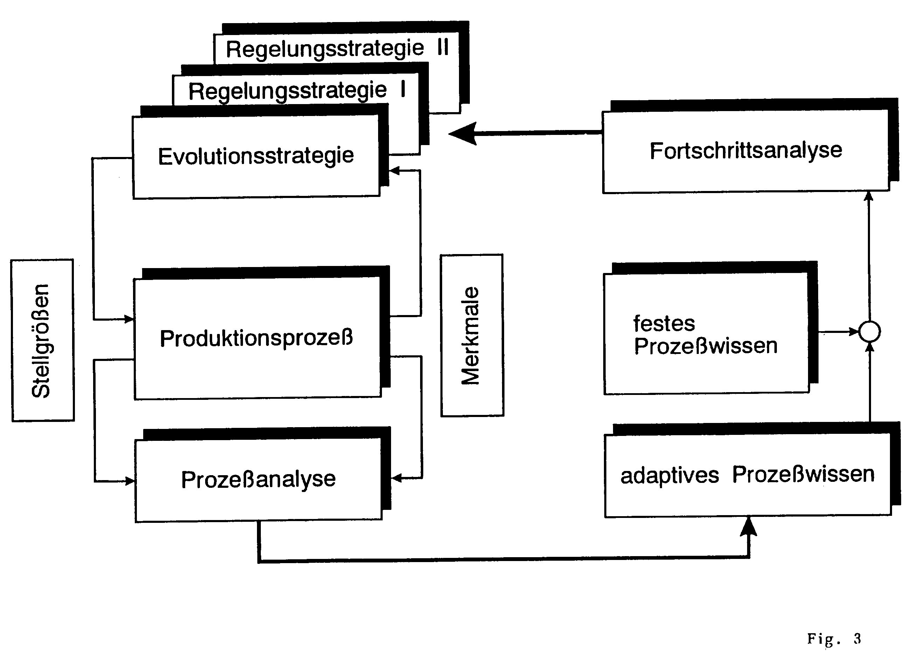

Ausgehend von der Tatsache, daß verschiedene Strategien in verschiedenen Gebieten des Zustandsraumes bei einer Aufgabenstellung unterschiedlich effektiv sind, wird im Sinne der vorliegenden Erfindung in Anwendung auf ein Abwasserreinigungssystem vorgeschlagen, die verschiedenen Strategien eingangsseitig parallel zu betreiben und ausgangsseitig die Stellgrößenvorschläge zu rekombinieren. Diese anhand von Figur 3 schematisch dargestellte Vorgehensweise führt dann schließlich zu der optimierten Konvergenzgeschwindigkeit gemäß Figur 1.

Eine der Regelungsstrategien kann dabei zumindest zum Anfangs zeitpunkt des abzulaufenden Prozesses oder beim Auftreten von Störungen die erwähnte Fuzzy-Steuerung sein, auf die nachfolgend eingegangen wird.

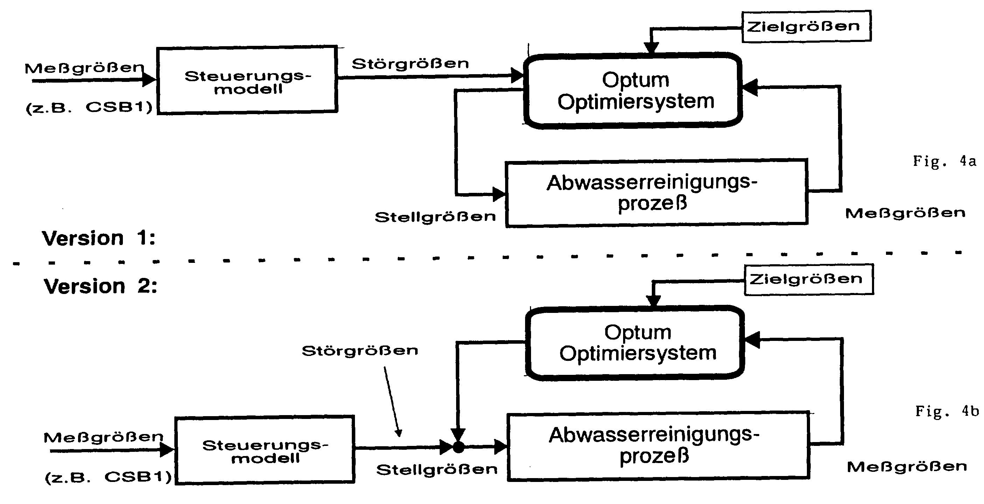

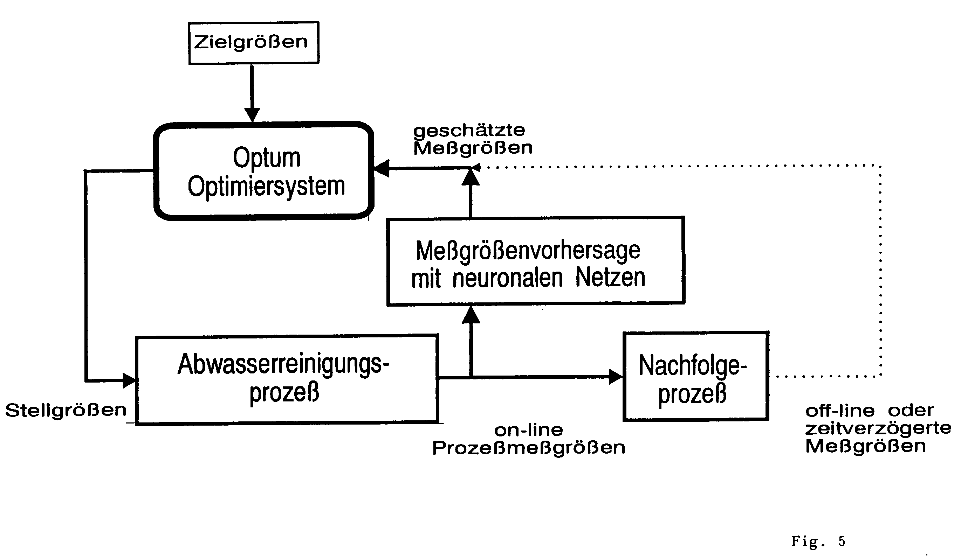

Eine zumindest in gewissen Bereichen ergänzende Regelungsstrategie II (Figur 3) kann auch in einer Vorwärtskopplung (Figur 4) und/oder der Berücksichtigung einer Meßgrößenvorhersage (Figur 5) liegen.

Prinzipiell unterscheidet man bei der Prozeßoptimierung Stellgrößen, Störgrößen und Meßgrößen. Stell- und Störgrößen sind Prozeßeingangsgrößen, Meßgrößen sind Prozeßausgangsgrößen. Stellgrößen können unabhängig voneinander beeinfluß werden, während Störgrößen vom Optimiersystem nicht verändert werden können.

In dieser Definition stellt beispielsweise der CSB-Wert des einlaufenden Abwassers eine Störgröße dar. Diese Störgröße könnte ignoriert werden und müßte vom Optimiersystem soweit möglich automatisch kompensiert werden. Dieser Vorgang ist aber sicherlich langsam. Eine bessere Lösung ist die Berücksichtigung der meßbaren Störgrößen in einer Vorwärtskopplung (Steuerung). Hier bieten sich zwei Methoden an (Figur 4a und 4b). Bei der ersten Methode (Version 1; Figur 4a) werden die Störgrößen zur Veränderung der Strategieparameter der Evolution verwendet. Bei der zweiten Methode (Version 2; Figur 4b) werden die Störgrößen als Störgrößenaufschaltung auf die Stellgrößen addiert.

Die beschriebene Vorwärtskopplung muß bei der Optimierung von Abwasserreinigungsprozessen zum Einsatz kommen, um rechtzeitig auf Schmutzfrachtschwankungen zu reagieren. Es sollen beide Methoden entwickelt, erprobt und die jeweiligen Vor- und Nachteile gegenübergestellt werden.

Im Falle der erwähnten Meßgrößenvorhersage dient der Vorhersage schwer erfaßbare oder zeitlich verzögert erfaßbare Meßgrößen durch die Korrelationsmodelle gemäß Figur 5. Existiert eine Korrelation zwischen on-line Prozeßgrößen und schwer erfaßbaren Meßgrößen, so kann die Meßgröße im vorhinein abgeschätzt werden. Prinzipiell bieten sich verschiedene Verfahren zur Aufstellung des Korrelationsmodelles an. Die analytische Modellbildung, basierend auf physikalischen, chemischen und reaktionskinetischen Ansätzen, ist die sicherste Methode, wenn die entsprechenden Zusammenhänge theoretisch mit hinreichender Genauigkeit bekannt sind. Die analytische Modellbildung soll als erste Methode zum Einsatz kommen. Sind die analytischen Zusammenhänge nicht hinreichend bekannt, so können empirische Modellansätze, basierend auf der Auswertung statistischer Versuchsplanungen oder Neuronaler Netze, eingesetzt werden. Dabei sind Neuronale Netze zu bevorzugen, da eine höhere Genauigkeit erzielt werden kann, zur Modellbildung keine definierten Betriebspunkte angefahren werden müssen und das Modell kontinuierlich abgeglichen werden kann.

Wie bereits an Figur 3 erläutert wurde, wird eine optimierte Regelung auf Basis der erweiterten Evolution plus einer parallelen Regelungsstrategie I bzw. II erzielt. Nachfolgend wird als Regelungsstrategie beispielsweise für den Prozeßstart oder bei Auftreten von Störgrößen ein Fuzzy-Regler verwandt, der bereits auch ohne Anwendung des Evolutionsstrategie-Verfahrens zu interessanten und deutlichen Verbesserungen führt.

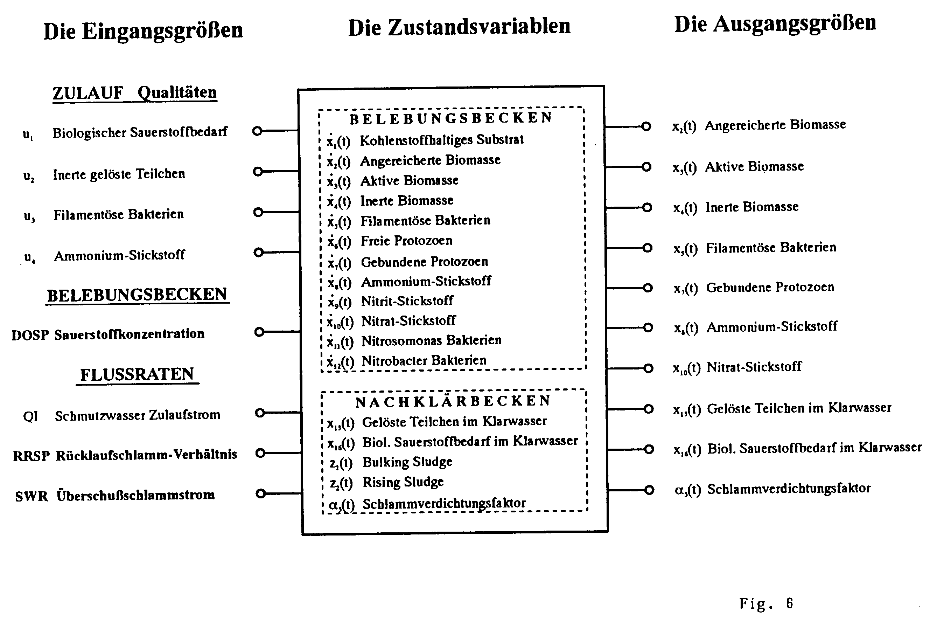

Bezüglich des Prozeßmodelles insbesondere für das Beispiel einer Trübungsregelung einer Abwasserklär-Aufbereitsanlage wird auf Figur 6 bezug genommen. Die Abbildung gemäß Figur 6 zeigt ein Streckenmodell der Belebtschlamm-Kläranlage, bei welchem sich das Prozeßmodell aus zwölf nicht-linearen, gekoppelten Differentialgleichungen 1. Ordnung mit nahezu fünfzig systemspezifischen Parameter, von denen zusätzlich zehn zustandsabhängig sind zusammensetzt.

Das Prozeßmodell beschreibt im wesentlichen die Entwicklung der Konzentrationen
- bei der Beseitigung kohlenstoffhaltiger, organischer Verunreinigungen (Substratoxidation)
- bei der Umwandlung stickstoffhaltiger Verbindungen zu biologisch abbaubaren Substanzen (Nitrifikation)
- sowie der daran beteiligten Bakterien.

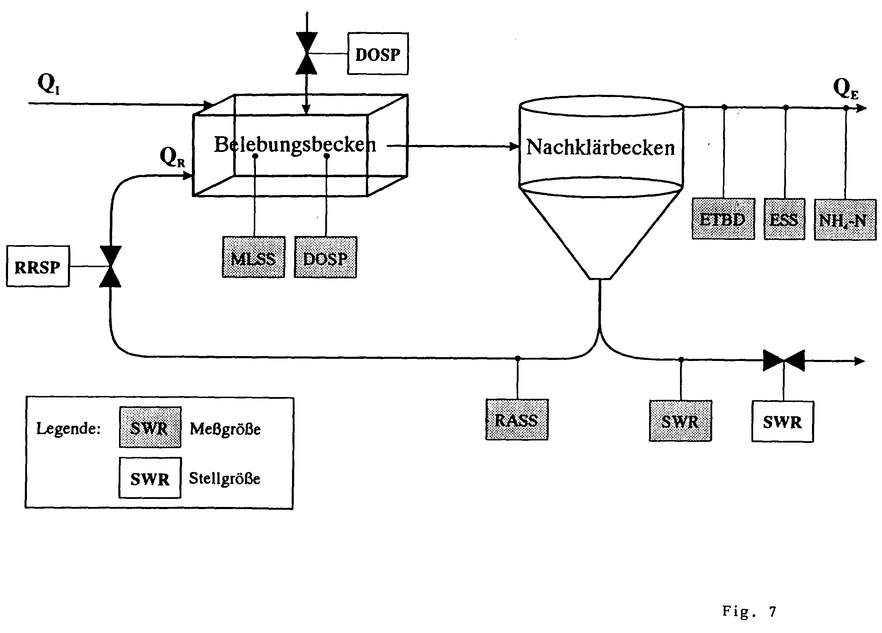

Anhand von Figur 7 ist in schematischer Darstellung eine Belebtschlammkläranlage aus regelungstechnischer Sicht wiedergegeben. In regelungstechnischer Hinsicht offenbart diese Anlage fünf relevante Prozeßgrößen sowie drei mögliche Stellgrößen des Reglers, von denen zwei (DOSP und SWR) aufgrund des Geschwindigkeitsstellalgorithmus' rückgekoppelt werden müssen.

Die für die Fuzzy-Regelung benötigten Wissensbasen beinhalten Prozeßzusammenhänge zwischen den zu beeinflussenden Prozeßgrößen sowie eventuelle Zusatzbedingungen als Einsatzgrößen und der jeweiligen Stellgrößenänderung als Ausgangsgröße. D.h., daß in einem derartigen Falle der momentane Prozeßzustand bewertet und daraus eine Stellgrößenänderung gemäß Produktionsregel generiert wird.

Im vorliegenden Beispiel kann die durch die Wissensbasis implementierte Heuristik lauten: "je kleiner die Trübung MLSS im Belebtschlammbecken ist, desto schneller muß die Schlammabfuhr reduziert werden".

Eine rein statische Erfassung der Prozeßgrößen kann sich als nicht ausreichend erweisen. Ein stationärer Zustand des Prozesses kann gegebenenfalls nur dann erreicht werden, wenn entsprechende Änderungstendenzen der Prozeßgrößen in entscheidenden Wissensbasen in einen entsprechenden Fuzzy-Regler integriert werden.

Dadurch kann eine deutliche Beschleunigung des Regelverhaltens erzielt werden. Eine weitere Optimierung kann dahin vorgenommen werden, daß unter Umständen bezüglich einzelner Meßgrößen auftrende zusätzliche Überschwingneigungen wiederum vermieden werden.

Der Fuzzy-Regler kann bei vorliegen eines qualitativen Regelverhaltens und -wissens entsprechend optimiert werden. Dabei kann die Umsetzung dieses Wissens in geeignete Regelstrategien aufwendig sein, insbesondere im Hinblick der bestehenden vielfachen Mehrfachabhängigkeiten der diversen Größen. Mit vergleichsweise geringem Aufwand lassen sich doch Regelstrategien erzielen, wenn auf entsprechendem Wissen basierende Heuristiken mit dem Regelalgorithmus zusammengestellt werden.

Nachfolgend wird ein Beispiel für die erweiterte Evolutionsstrategie am Beispiel einer biologischen Belebungsstufe dargestellt.

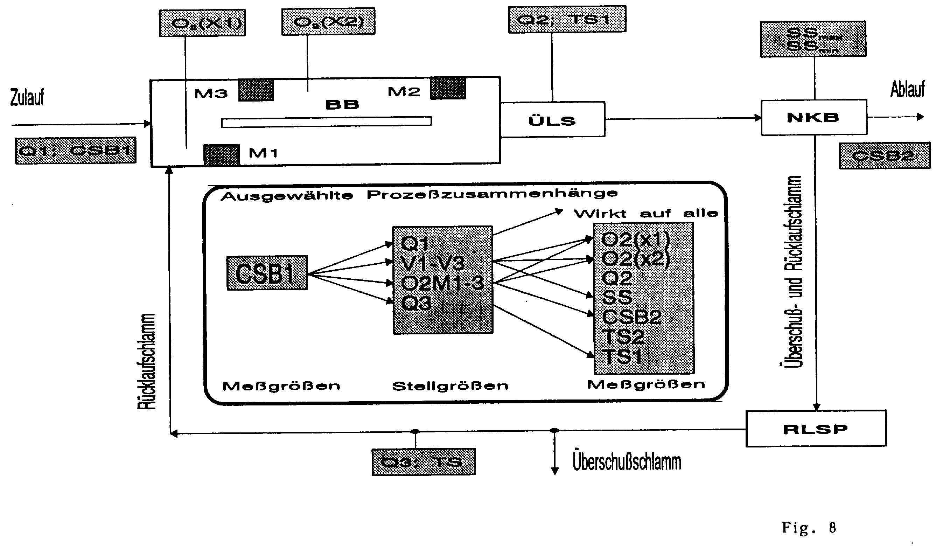

Figur 8 zeigt eine vereinfachte Darstellung einer biologischen Belebungsstufe. Das Rohwasser gelangt über den Zulauf in das Belebungsbecken (BB). In das Belebungsbecken wird über die Mammutrotoren (M1-M3) der Sauerstoff eingetragen. Die Sauerstoffkonzentration wird über die O₂-Meßwertnehmer registriert. Im Überlaufschacht (ÜLS) wird der Volumenstrom (Q) und die Tockensubstanzmenge (TS) registriert. Vom Überlaufschacht gelangt das Wasser aus dem Belebungsbecken in das Nachklärbecken (NKB). In diesem wird die maximale und die minimale Schlammspiegelhöhe festgelegt. Über die Rücklaufschlammpumpe (RSP) wird der Überlauf- und Rücklaufschlamm aus dem Nachklärbecken abgezogen. Die Menge Q3 und der Trockensubstanzgehalt TS3 des Rücklaufschlammes wird registriert und er gelangt in das Belebungsbecken.

Bei der Analyse des Prozeßübertragungsverhaltens ergeben sich im dargestellten, vereinfachten Fall folgende Meßwerte:
- Sauerstoffgehalt im Belebungsbecken an verschiedenen Stellen O₂(X₁), O₂(X₂)
- Volumenstrom des aus dem Belebungsbecken austretenden Schlamm-Wasser-Gemisches Q₂
- Trockensubstanzgehalt dieses Gemisches TSₛ
- Schlammspiegelhöhe im Nachklärbecken SS
- Trockensubstanzgehalt des Rücklaufschlammes TS₃
- Qualität des aus dem Nachklärbecken ablaufenden Wassers CSB

Ferner sind bei der Analyse des Prozessübertragungsverhaltens folgende Steuergrößen vorhanden:
- Zulaufmenge Q₁
- Umlaufgeschwindigkeiten der Mammutrotoren V₁₋₃
- Menge des eingetragenen Sauerstoffes O₂M₁₋₃
- Menge des Rücklaufschlammes Q₃

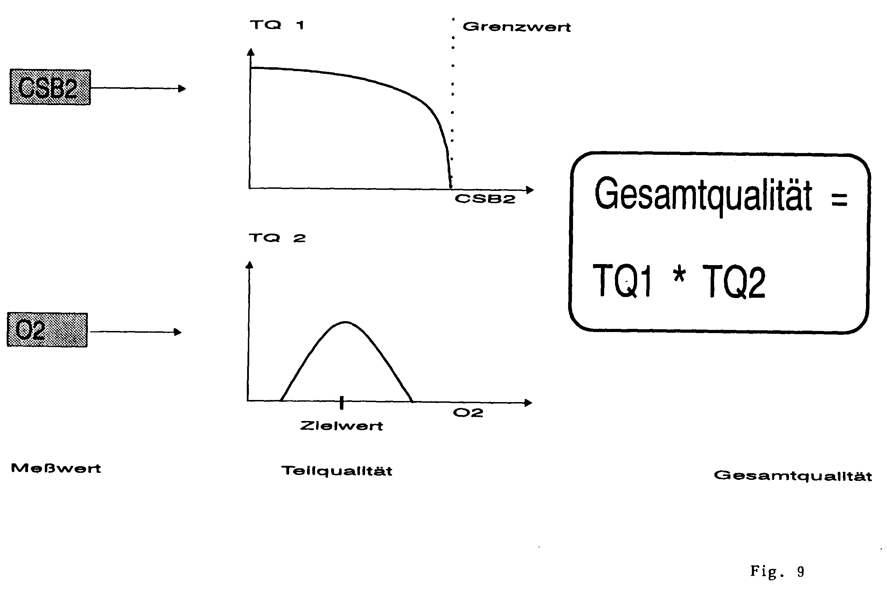

Die ausgewählten Prozeßzusammenhänge sind in Figur 9 dargestellt. Die Erfassung der Meßgrößen soll mit auf dem Markt befindlichen kommerziellen Meßsystemen erfolgen. Die Stellgrößen sind über die in der Regel vorhandene Prozeßautomatisierung veränderbar. Die Vorgehensweise bei der evolutionsstrategischen Optimierung soll nun stark vereinfacht anhand der Meßgrößen Sauerstoffgehalt O₂ und dem CSB2-Wert detaillierter dargestellt werden.

Die wichtigste Teilqualität errechnet sich aus dem CSB2-Wert. Der CSB2-Wert soll minimiert werden bzw. darf er einen vorgegebenen Grenzwert nicht überschreiten. Der Sauerstoffgehalt hingegen soll einen Zielwert approximieren, wobei der Zielwert durchaus in Abhängigkeit von den übrigen Meßgrößen variieren kann. Die Transformation von Meßgrößen auf Teilqualitäten ist in Schema 12 dargestellt.

Die dargestellten Funktionen werden aus den Anforderungen des Betreibers des Optimiersystems an das Optimierverhalten gebildet und beeinflussen wesentlich den Optimierverlauf. So muß die Teilqualität für den CSB2-Wert beim Erreichen seines Grenzwertes zu Null werden. Dagegen muß die Teilqualität für die Sauerstoffqualität beim Erreichen des Zielwertes maximal werden.

Das Wesen der Optimierung besteht nun darin, für die Gesamtqualität standig den Maximalwert zu erreichen. Aus diesem Grunde muß aus den Teilqualitäten eine Gesamtqualität gebildet werden. Im vorliegenden Fall wurde sinnvollerweise die multiplikative Verknüpfung gewählt, da die Gesamtqualität dadurch beim Erreichen des CSB2-Grenzwertes zu Null wird. Bei einer additiven Verknüpfung beispielsweise könnte der CSB2-Grenzwert überschritten werden, wenn durch eine hohe O₂ Teilqualität die Gesamtqualität verbessert würde. Diese Darstellung ist beispielhaft und ungeachtet der Tatsache, daß bei einer hohen Sauerstoffkonzentration immer ein niedriger CSB2-Wert zu erwarten ist.

Der Zusammenhang zwischen den Stellgrößen des Abwasserreinigungsprozesses und den Teilqualitäten ist komplex. Im wesentlichen wirken alle Stellgrößen auf die angegebenen Meßwerte. Ist nun der Zusammenhang zwischen einzelnen Stellgrößen und einzelnen Meßgrößen, wie in Figur 8 exemplarisch angegeben, zumindest tendenziell bekannt, so kann dieses Wissen über einen Regelzweig in die erweiterte Evolutionsstrategie zur Beschleunigung der Optimierung eingebracht werden. Im Einzelfall hängt der Einfluß der Stellgröpßen von den Bemessungswerten und der Art der Anlagenausrüstung eines Belebungsbeckens ab.

In dem angegebenen Beispiel ist die Größe CSB1 eine Meßgröße die nicht von den vorhandenen Stellgrößen verändert werden kann. Eine solche Größe könnte als Störgröße aufgefaßt werden, die durch die Optimierung kompensiert werden soll. Diese Vorgehensweise ist allerdings für die Abwasserreinigung zu träge.

Da der CSB1-Wert im vorhinein erfaßt wird, kann diese Größe in Form einer Störgrößenaufschaltung das Optimierverhalten wesentlich beschleunigen. Dies geschieht durch die Vorwärtskopplung, wobei das Übertragungsverhalten für diese Steuerung entweder durch ein reaktionstechnisches Modell oder durch eine empirische Modellbildung mit Neuronalen Netzen realisiert wird.

Das Optimiersystem erhält bei der on-line Optimierung eine Schnittstelle zur Ansteuerung der Stellelemente und zur Erfassung der Meßwerte über eine Meßkette (Sensor, Meßumwandler, Datenübertragung). Dem Optimiersystem werden nun die Stellgrößen mit ihren Stellbereichen, die verwendeten Meßgrößen, die Teil- und Gesamtqualitätsfunktionen über Konfiguratinsdateien mitgeteilt. Weiterhin werden die bekannten Prozeßzusammenhänge zur Regelung und das Modellübertragungsverhalten zur Vorwärtskopplung eingegeben. Anschließend wird die Optimierung gestartet.

Das Optimiersystem verändert während der Optimierung die Stellgrößen Q₁, V₁₋₃, O₂M₁₋₃ und Q₃ automatisch so, daß die Gesamtqualität optimal wird. Im angegebenen Beispiel würde die Veränderung der Stellgrößen den O₂-Wert unter Berücksichtigung des CSB2-Grenzwertes auf den gewünschten Zielwert automatisch einstellen.

Mit Hilfe des erfindungsgemäßen Prozeßverfahrens läßt sich eine automatische Datenübernahme vom abwassertechnischen Prozeß in eine entsprechende elektronische Steuereinheit, kurz auch Optimiereinheit genannt, ermöglichen. Die durch die elektronsiche Steuer- oder Optimiereinheit vorgeschlagenen Schritte zur Änderung der Prozeßführung können an einer entsprechenden Datenausgabenstelle, beispielsweise in Form eines Monitors oder eines Druckers oder in sonstiger Weise dargestellt werden. Vom Bedienungspersonal können dann die entsprechenden Einflußnahmen an der Anlage vorgenommen werden.

Natürlich möglich ist auch ein automatisches Aufbereitungsverfahren, bei welcher von der Aufbereitungsanlage die entsprechenden Prozeßvariablen automatisch ermittelt und die entsprechende Steuerung und Regelung selbstätig vorgenommen wird.

### Abkürzungs-Tabelle

- BB: Belebungsbecken
- M_{I}: Mammutrotoren
- ÜLS: Überlaufschacht
- SS: Schlammspiegelhöhe
- Qⱼ: Volumenströme
- TS: Trockensubstanz
- NKB: Nachklärbecken
- RLSP: Rücklaufschlammpumpe
- O₂(Xⱼ): Sauerstoffkonzentration am Ort Xⱼ
- CSBi: Konzentration des chemischen Sauerstoffbedarfs (Meßstelle i)
- vᵢ: Umlaufgeschwindigkeit des i-ten Mammutrotors

### EINGANGSVARIABLEN des Fuzzy Controllers

- ETBD: Konzentration des biologischen Sauerstoffbedarfs im Effluent (g/m³)
- ESS: Konzentration der gelösten Teilchen im Effluent (9/m³)
- NH₄-N: Konzentration des Ammonium-Stickstoff-Gehaltes im Effluent (g/m³)
- MLSS: Konzentration der Trübung im Belebungsbecken (g/m³)
- RASS: Konzentration der Trübung des Rücklaufschlammes (g/m³)
- FIL: Grenzwertbedingung des Störfalls "Filamentöse Trübung" (g/m³)
- DNIT1: Grenzwertbedingung 1 des Störfalls "Blähschlammbildung" (g/m³)
- DNIT2: Grenzwertbedingung 2 des Störfalls "Blähschlammbildung" (hr)

### AUSGANGSVARIABLEN des Fuzzy Controllers

- dSWR: Änderung der Schlammabfuhr (m³/hr)
- dDosp: Änderung der Sauerstofführungsgröße (g/m³)
- dRRSP: Änderunq des Rücklaufschlammverhältnisses (/)

### MASSENSTRÖME des Prozesses

- Q_{I}: Massestrom am Zulauf (Influent) (m³/hr)
- Q_{R}: Massestrom des Schlammrücklaufs (m³/hr)
- Q_{E}: Massestrom am Ablauf (Effluent) (m³/hr)

### QUALITÄTEN der Zulauffracht

- u₁: Konzentration des biologischen Sauerstoffbedarfs im Influent (g/m³)
- u₂: Konzentration der inerten gelösten Teilchen im Influent (g/m³)
- u₃: Konzentration der filamentösen Bakterien im Influent (g/m³)
- u₄: Konzentration des Ammonium-Stickstoffs im Influent (g/m³)

## Patentansprüche

1. Verfahren zum Betrieb einer Abwasserreinigungsanlage, insbesondere einer Belebtschlamm-Klaranlage, **dadurch gekennzeichnet**, daß eine Optimierung des Wasserreinigungsund/oder -aufbereitungsverfahrens mittels eines Evolutionsstrategie-Verfahrens durchgeführt wird, bei dem jeweils infolge von zufälligen Änderungen (Mutationen) der Stellgrößen im Rahmen einer vorgebbaren Verteilungsdichtefunktion (Standardabweichung) neue Stellgrößen für die das Abwasserreinigungs- und/oder -aufbereitungsverfahren beeinflussenden Stellglieder ermittelt werden, und anhand einer vorwählbaren Veränderungsvorschrift (Selektion) eine Auswahl von verbesserten Stellgrößen zur Ansteuerung der Stellglieder zum Betrieb der Abwasserreinigungsanlage zur Durchführung eines nächsten Evolutionsschrittes durchgeführt wird, und daß das Evolutionsstrategie-Verfahren an unterschiedlich auftretende Störgrößen, Abwasserreinigungsanlage-Faktoren und -Gegebenheiten sowie Aufbereitungsbedingungen und/oder zur Erhöhung der Konvergenzgeschwindigkeit zur Erreichung einer optimierten Einstellung in kürzerer Zeit angepaßt wird (erweitertes Evolutionsstrategie-Verfahren), und zwar unter Berücksichtigung von Prozeßvorwissen in Form einer gegebenen Abhängigkeit der Ausgangs- oder Meßgrößen von den Stell- und/ oder Störgrößen wiedergebenden Übertragungsfunktion und/ oder automatisch adaptiven Prozeßwissen über die Übertragungsfunktion zwischen Stell- und/oder Störgrößen und den sich danach einstellenden Meßgrößen, in dem zumindest einer der folgenden Schritte durchgeführt wird
- es wird eine Erwartungswertverschiebung für eine jeweils nächste Mutation auf Basis vorbekannter Prozeßzusammenhänge durchgeführt,
- es wird eine statistische Adaption im Sinne einer Adaption der Richtung und/oder Schrittweite der Mutation durchgeführt, und/oder
- es wird eine Steuerung der Schrittweite in Abhängigkeit von dem Abstand des aktuellen Meßwertes von dem optimalen Wert durchgeführt.

2. Verfahren nach Anspruch 1, **dadurch gekennzeichnet**, daß zumindest phasenweise ergänzend zum erweiterten Evolutionsstrategieverfahren eine Vorwärtskopplung dergestalt vorgenommen wird, daß unter Berücksichtigung von Prozeßvorwissen und/oder automatisch adaptivem Prozeßwissen bereits im zeitlichen Vorlauf entsprechende VerfahrensSchritte durchgeführt werden, wodurch die Abwasserreinigungsanlage bei Eintritt der erwarteten Situation sich bereits in dem für diesen Zustand vorbereiteten Betriebszustand befindet.

3. Verfahren nach Anspruch 1 oder 2, **dadurch gekennzeichnet**, daß zumindest phasenweise ergänzend zum erweiterten Evolutionsstrategie-Verfahren eine Meßgrößenvorhersage im Hinblick auf vorhandenes Prozeßvorwissen oder automatisch adaptivem Prozeßwissen durchgeführt wird, um bereits für den weiteren zeitlichen Ablauf benötigte Meßdaten vorweg zu extrapolieren und in den Regelkreis der Abwasserreinigungsanlage einzugeben.

4. Verfahren insbesondere nach einem der Ansprüche 1 bis 3, **dadurch gekennzeichnet**, daß zumindest phasenweise, vorzugsweise bei Verfahrensbeginn und/oder bei Auftreten von Störgrößen ergänzend bzw. alternativ bei erweitertem Evolutionsstrategieverfahren ein Regelungsverfahren auf der Basis der Fuzzy-Regelung durchgeführt wird.

5. Abwasserreinigungsanlage zur Durchführung einer Abwasserreinigung und/oder -aufbereitung nach einem der Ansprüche 1 bis 4, **dadurch gekennzeichnet**, daß eine elektronische Steuerungs- und/oder Optimierungseinrichtung vorgesehen ist, die derart aufgebaut und betrieben wird, daß eine Optimierung des Wasserreinigungs- und/oder -aufbereitungsverfahrens mittels eines Evolutionsstrategie-Verfahrens durchgeführt wird, bei dem jeweils infolge von zufälligen Änderungen (Mutationen) der Stellgrößen im Rahmen einer vorgebbaren Verteilungsdichtefunktion (Standardabweichung) neue Stellgrößen für die das Abwasserreinigungs- und/oder -aufbereitungsverfahren beeinflussenden Stellglieder ermittelt werden, und anhand einer vorwählbaren Veränderungsvorschrift (Selektion) eine Auswahl von verbesserten Stellgrößen zur Ansteuerung der Stellglieder zum Betrieb der Abwasserreinigungsanlage zur Durchführung eines nächsten Evolutionsschrittes durchgeführt wird, und daß das Evolutionsstrategie-Verfahren an unterschiedlich auftretende Störgrößen, Abwasserreinigungsanlage-Faktoren und - Gegebenheiten sowie Aufbereitungsbedingungen und/oder zur Erhöhung der Konvergenzgeschwindigkeit zur Erreichung einer optimierten Einstellung in kürzerer Zeit angepaßt wird (erweitertes Evolutionsstrategie-Verfahren), und zwar unter Berücksichtigung von Prozeßvorwissen in Form einer gegebenen Abhängigkeit der Ausgangs- oder Meßgrößen von den Stell- und/ oder Störgrößen wiedergebenden Übertragungsfunktion und/ oder automatisch adaptiven Prozeßwissen über die Übertragungsfunktion zwischen Stell- und/oder Störgrößen und den sich danach einstellenden Meßgrößen, in dem zumindest einer der folgenden Schritte durchgeführt wird
- es wird eine Erwartungswertverschiebung für eine jeweils nächste Mutation auf Basis vorbekannter Prozeßzusammenhänge durchgeführt,
- es wird eine statistische Adaption im Sinne einer Adaption der Richtung und/oder Schrittweite der Mutation durchgeführt, und/oder
- es wird eine Steuerung der Schrittweite in Abhängigkeit von dem Abstand des aktuellen Meßwertes von dem optimalen Wert durchgeführt.

## Claims

1. Method of operating a waste-water purification plant, in particular an activated-sludge sewage plant, characterized in that an optimization of the water purification and/or treatment method is carried out by means of an evolution strategy method in which new manipulated variables for the actuators which influence the waste-water purification and/or treatment method are always determined as a consequence of random changes (mutations) in the manipulated variables within the framework of a specifiable distribution density function (standard deviation) and, on the basis of a preselectable alteration procedure (selection) improved manipulated variables are selected for activating the actuators for operating the waste-water purification plant in order to carry out a subsequent evolution step, and in that the evolution strategy method is adapted to variously occurring disturbing variables, waste-water purification plant factors and conditions and treatment conditions and/or in order to increase the convergence speed for reaching an optimized setting in a shorter time (expanded evolution strategy method), in particular, with account being taken of previous process knowledge in the form of a given dependence of the output or measured variables on the transfer function which reproduces the manipulated and/or disturbing variables and/or automatically adaptive process knowledge about the transfer function between manipulated and/or disturbing variables and the measured variables established thereafter, in which at least one of the following steps is carried out
- an expected value shift is carried out for each subsequent mutation on the basis of previously known process relationships,
- a statistical adaptation is carried out for the purpose of an adaptation of the direction and/or step width of the mutation, and/or
- a control of the step width is carried out as a function of the distance of the current measured value from the optimum value.

2. Method according to Claim 1, characterized in that, at least as a phasewise supplement to the expanded evolution strategy method, a forward coupling is carried out in such a way that, with account being taken of prior process knowledge and/or automatically adaptive process knowledge method steps are already carried out with a time lead, as a result of which, when the expected situation sets in, the waste-water purification plant is already in the operating state prepared for this state.

3. Method according to Claim 1 or 2, characterized in that, at least phasewise, a measured-value prediction is carried out, as a supplement to the expanded evolution strategy method, with regard to existing prior process knowledge or automatically adaptive process knowledge in order to extrapolate beforehand measured data already needed for the further time sequence and to input it into the control loop of the waste-water purification plant.

4. Method, in particular according to one of Claims 1 to 3, characterized in that, at least phasewise, preferably at the start of the method and/or in the event of disturbing variables occurring, a control method based on fuzzy control is carried out as a supplement or alternative in expanded evolution strategy method.

5. Waste-water purification plant for carrying out a waste-water purification and/or treatment according to one of Claims 1 to 4, characterized in that an electronic control and/or optimization device is provided which is constructed and operated so that an optimization of the water purification and/or treatment method is carried out by means of an evolution strategy method in which new manipulated variables for the actuators which influence the waste-water purification and/or treatment method are always determined as a consequence of random changes (mutations) in the manipulated variables within the framework of a specifiable distribution density function (standard deviation) and, on the basis of a preselectable alteration procedure (selection) improved manipulated variables are selected for activating the actuators for operating the waste-water purification plant in order to carry out a subsequent evolution step, and in that the evolution strategy method is adapted to variously occurring disturbing variables, waste-water purification plant factors and conditions and treatment conditions and/or in order to increase the convergence speed for reaching an optimized setting in a shorter time (expanded evolution strategy method), in particular, with account being taken of previous process knowledge in the form of a given dependence of the output or measured variables on the transfer function which represents manipulated and/or disturbing variables and/or automatically adaptive process knowledge about the transfer function between manipulated and/or disturbing variables and the measured variables established thereafter, in which at least one of the following steps is carried out
- an expected value shift is carried out for each subsequent mutation on the basis of previously known process relationships,
- a statistical adaptation is carried out for the purpose of an adaptation of the direction and/or step width of the mutation, and/or
- a control of the step width is carried out as a function of the distance of the current measured value from the optimum value.

## Revendications

1. Procédé pour exploiter une installation d'épuration d'eaux usées, en particulier d'une installation d'épuration à boues actives, caractérisé en ce qu'une optimisation du procédé d'épuration et/ou de traitement d'eaux usées s'effectue au moyen d'un procédé à stratégie d'évolution, dans lequel on détecte, suite à des modifications aléatoires (mutations) des grandeurs de réglage dans le cadre d'une fonction de densité de répartition prédéterminée (écart standard), de nouvelles grandeurs de réglage pour les organes de réglage qui influencent le procédé d'épuration et/ou de traitement d'eaux usées, et en se référant à une prescription de modification prédéterminée (sélection), on fait un choix de grandeurs de réglage améliorées pour piloter les organes de réglage pour l'exploitation de l'installation d'épuration d'eaux usées, pour effectuer une opération d'évolution suivante, et en ce que le procédé à stratégie d'évolution est adapté aux grandeurs perturbatrices, aux facteurs et aux données de l'installation d'épuration d'eaux usées qui apparaissent différemment ainsi qu'aux conditions de traitement et/ou pour augmenter la vitesse de convergence pour atteindre un réglage optimisé en moins de temps (procédé à stratégie d'évolution élargie), et ceci en prenant en compte des connaissances de processus sous forme d'une dépendance donnée entre des grandeurs de sortie ou de mesure et la fonction de transmission reproduisant les grandeurs de réglage et/ou de perturbation, et/ou des connaissances de processus automatiquement adaptatives sur la fonction de transmission entre les grandeurs de réglage et/ou de perturbation et les grandeurs de mesure qui s'établissent ensuite, en effectuant du moins l'une des opérations suivantes :
- on effectue un déport de la valeur attendue pour une mutation respectivement suivante en se basant sur des relations de processus connues ;
- on effectue une adaptation statistique dans le sens d'une adaptation de la direction et/ou de l'ampleur des pas de la mutation, et/ou
- on effectue une commande d'ampleur des pas en dépendance entre l'écart de la valeur de mesure actuelle et la valeur optimale.

2. Procédé selon la revendication 1, caractérisé en ce que l'on réalise une chaîne d'action prospective du moins par phase en supplément au procédé à stratégie d'évolution élargi, de telle sorte qu'en prenant en considération des connaissances de procédé préalables et/ou des connaissances de procédé automatiquement adaptatives, on effectue déjà en avance des opérations de procédé correspondantes, grâce à quoi l'installation d'épuration d'eaux usées est déjà à l'état de fonctionnement préparé à cet état lorsque la situation attendue s'établit.

3. Procédé selon l'une ou l'autre des revendications 1 et 2, caractérisé en ce que l'on réalise une prédiction de grandeurs de mesure du moins par phase en supplément au procédé à stratégie d'évolution élargie, à l'égard d'une connaissance de processus préalable ou d'une connaissance de processus automatiquement adaptative, afin d'extrapoler déjà en avance des données de mesure nécessaires pour la poursuite du déroulement temporel, et de les entrer dans le circuit de régulation de l'installation d'épuration d'eaux usées.

4. Procédé en particulier selon l'une quelconque des revendications 1 à 3, caractérisé en ce que l'on effectue un procédé de régulation en se basant sur la régulation floue du moins par phase, de préférence au début du procédé et/ou lors de l'apparition de grandeurs perturbatrices en supplément ou en variante lors d'un procédé à stratégie d'évolution élargi.

5. Installation d'épuration d'eaux usées pour effectuer une épuration et/ou un traitement d'eaux usées selon l'une quelconque des revendications 1 à 4, caractérisée en ce qu'il est prévu un dispositif de commande et/ou d'optimisation électronique qui est structurée et exploitée de telle sorte qu'une optimisation du procédé d'épuration et/ou de traitement d'eaux usées s'effectue au moyen d'un procédé à stratégie d'évolution, dans lequel on détecte, suite à des modifications aléatoires (mutations) des grandeurs de réglage dans le cadre d'une fonction de densité de répartition prédéterminée (déport standard), de nouvelles grandeurs de réglage pour les organes de réglage qui influencent le procédé d'épuration et/ou de traitement d'eaux usées, et en se référant à une prescription de modification prédéterminée (sélection), on fait un choix de grandeurs de réglage améliorées pour piloter les organes de réglage pour l'exploitation de l'installation d'épuration d'eaux usées, pour effectuer une opération d'évolution suivante, et en ce que le procédé à stratégie d'évolution est adapté aux grandeurs perturbatrices, aux facteurs et aux données de l'installation d'épuration d'eaux usées qui apparaissent différemment ainsi qu'aux conditions de traitement et/ou pour augmenter la vitesse de convergence pour atteindre un réglage optimisé en moins de temps (procédé à stratégie d'évolution élargie), et ceci en prenant en compte des connaissances de processus préalables sous forme d'une dépendance donnée entre les grandeurs de sortie ou de mesure et la fonction de transmission reproduisant les grandeurs de réglage et/ou de perturbation, et/ou des connaissances de processus automatiquement adaptatives sur la fonction de transmission entre les grandeurs de réglage et/ou de perturbation et les grandeurs de mesure qui s'établissent ensuite, en effectuant du moins l'une des opérations suivantes :
- on effectue un déport de la valeur attendue pour une mutation respectivement suivante en se basant sur les relations de processus connues ;
- on effectue une adaptation statistique dans le sens d'une adaptation de la direction et/ou de l'ampleur des pas de la mutation, et/ou
- on effectue une commande de l'ampleur des pas en dépendance de l'écart entre la valeur de mesure actuelle et la valeur optimale.
